# EUROPEAN PATENT SPECIFICATION

(11) **EP 3 192 326 B1**
(45) Date of publication and mention of the grant of the patent: **23.05.2018**
(21) Application number: 15766211.5
(22) Date of filing: 10.09.2015
(51) Int. Cl.: H05B 3/84

(54) **HEATED COATED GLAZING**
BEHEIZTE BESCHICHTETE VERGLASUNG
VITRAGE REVÊTU ET CHAUFFÉ

(30) Priority: 12.09.2014 GB 201416175
(43) Date of publication of application: 19.07.2017
(73) Proprietor: Pilkington Group Limited, Nr. Ormskirk, Lancashire L40 5UF (GB)
(72) Inventor: CHAMBERLAIN, Mark Andrew, Ormskirk Lancashire L40 5UF (GB); HAZZARD, Alan David, Ormskirk Lancashire L40 5UF (GB)
(74) Representative: Denno, Richard Christopher Somer
(86) International application number: PCT/GB2015/052621
(87) International publication number: WO 2016/038376

(56) References cited:
- WO-A2-03/015473
- CA-A1- 2 893 808
- DE-A1-102009 025 888
- US-A1- 2012 103 961

## Description

### Background of the invention

The invention is concerned with a glazing comprising a conductive coating and a data transmission window.

It is known in the field of automotive windscreens to provide a conductive coating suitable for electrical heating of a windscreen. A known problem is that such a conductive coating may block electromagnetic radiation in a frequency band needed by transmitters or receivers in a vehicle, i.e. the conductive coating is also a non-transmitting coating. A known solution is to provide a 'data transmission window' in the non-transmitting coating for a data signal. Data transmission windows are at least partly non-conductive, so that radiation of a desired frequency band may pass through. Multiple data transmission windows may be required in a windscreen of a vehicle having multiple transmitters or receivers. Examples of transmitters or receivers are cameras, rain sensors and automatic toll payment transponders.

Busbars are provided for supplying electrical power to an electrically heated region of the conductive coating. Perturbation of heating around a data transmission window, due to its position relative to a busbar or to another window, may result in "hotspots". Hotspots may be defined as unacceptable due to exceeding a temperature threshold or temperature difference threshold.

EP1274597B1 (Glaverbel/Degand) discloses an automotive windscreen comprising an electrically heatable coating and at least two data transmission windows, at least partially in contact with the electrically heatable coating. In order to minimise hotspots, the two data transmission windows are separated by a portion which is also in contact with the electrically heatable coating.

EP1274597B1 further discloses that perturbation of heating is greatest when a data transmission window is substantially surrounded by the electrically heatable coating. To improve heating characteristics, it is believed that the two data transmission windows should be spaced from busbars by at least 150 mm and from each other by at least 40 mm. Thus an arrangement of data transmission windows to minimise hotspots according to EP1274597B1 may constrain a position of a receiver or a transmitter. US2012/103961 discloses another automotive windscreen comprising an electrically heatable coating according to the prior art.

There remains a need for an alternative glazing comprising a conductive coating and at least one data transmission window, in order to reduce hotspots whilst permitting adequate freedom of position for transmitters or receivers.

### Statement of invention

According to the present invention from a first aspect, a glazing is provided comprising the features set out in claim 1 attached hereto.

The present invention provides at least one data transmission window separated from an electrically heated region of a conductive coating by a deletion line. Surprisingly, the inventors have found that unacceptable hotspots may be eliminated if a deletion line is arranged between a data transmission window and an electrically heated region of a conductive coating.

The inventors have found that forming a cut edge of a conductive coating and carrier film according to the prior art (in which a data transmission window is positioned at least partially in contact with the electrically heated region) using a blade causes cracks to propagate diagonally, at approximately 45 degrees to the cut edge. The cracks cause electrical discontinuities in the conductive coating, which result in unacceptable hotspots in the electrically heated region and in-service failure of a glazing. Surprisingly, the inventors have found that forming a deletion line in the conductive coating (leaving the carrier film intact) according to the invention causes fewer cracks in an electrically heated region than in the prior art.

In an advantageous embodiment, the deletion line is provided by laser ablation, which provides a smooth cut edge, so cracks are almost completely eliminated. Thus hotspots and in-service failures are significantly reduced compared with the prior art.

According to the present invention, at least two data transmission windows are separated by a deletion line from an electrically heated region of a conductive coating which substantially surrounds them, thus providing an unheated region of the conductive coating. The inventors have found that hotspots around at least two data transmission windows are reduced by positioning the data transmission windows in an unheated region of the conductive coating. By contrast, prior art discloses data transmission windows which are at least partially in contact with the electrically heated coating.

The second region is electrically isolated from the second busbar.

The deletion line is preferably narrow, so as to be invisible to a driver. To the extent that the deletion line is visible to the driver, it serves the visual function of a picture frame around the data transmission windows, so is unobtrusive to the driver.

Preferably, the deletion line width is 100 µm or less.

Preferably, the deletion line width is 10 µm or less.

Preferably, the deletion line is a laser ablation line.

Preferably, each data transmission window is at least 40 mm wide and at least 20 mm in height.

Preferably, the first busbar extends substantially parallel with, and adjacent to, a portion of an upper edge of the glazing.

Preferably, the glazing further comprises an auxiliary busbar separated from the first busbar by the deletion line.

Preferably, the first busbar and the deletion line are arranged to contact each other, so that a corner of the electrically heated region is formed.

In an advantageous embodiment, the corner of the electrically heated region formed by the first busbar and the deletion line is substantially a right angle. The inventors have found that unacceptable hotspots can be eliminated when the first busbar and the deletion line are substantially perpendicular at a point of contact with each other.

Preferably, the conductive coating has sheet resistance in the range 2 ohms per square to 20 ohms per square.

Preferably, the glazing further comprises a carrier film for carrying the conductive coating. More preferably the carrier film material is polyethylene terephthalate (PET).

Preferably, the glazing further comprises first and second sheets of interlayer material, wherein the carrier film is laid over the first sheet of interlayer material and wherein the second sheet of interlayer material is laid over the carrier film. More preferably the interlayer material is polyvinylbutyral (PVB).

According to the present invention from a second aspect, an automotive vehicle is provided, comprising the features set out in claim 13 attached hereto.

Surprisingly, the inventors have found that an automotive vehicle comprising a glazing according to the invention and at least two data transmission windows has reduced hotspots compared with a glazing of the prior art.

According to the present invention from a third aspect, a process for manufacture of a glazing is provided, comprising the steps set out in claim 14 attached hereto.

Surprisingly, the inventors have found that a process for manufacture of a glazing according to the invention wherein a deletion line is made by laser ablation has reduced hotspots compared with a glazing of the prior art.

### Brief description of the drawings

The invention will now be described by means of non-limiting examples with reference to the attached figures.
Fig. 1 shows a glazing according to the invention comprising one data transmission window.
Fig. 2 shows a glazing according to the invention comprising two data transmission windows.

### Detailed description of the invention

Although the invention is described herein with particular reference to an automotive windscreen, it will be understood that it has applications to other vehicle glazing, for example a rear window or a side window.

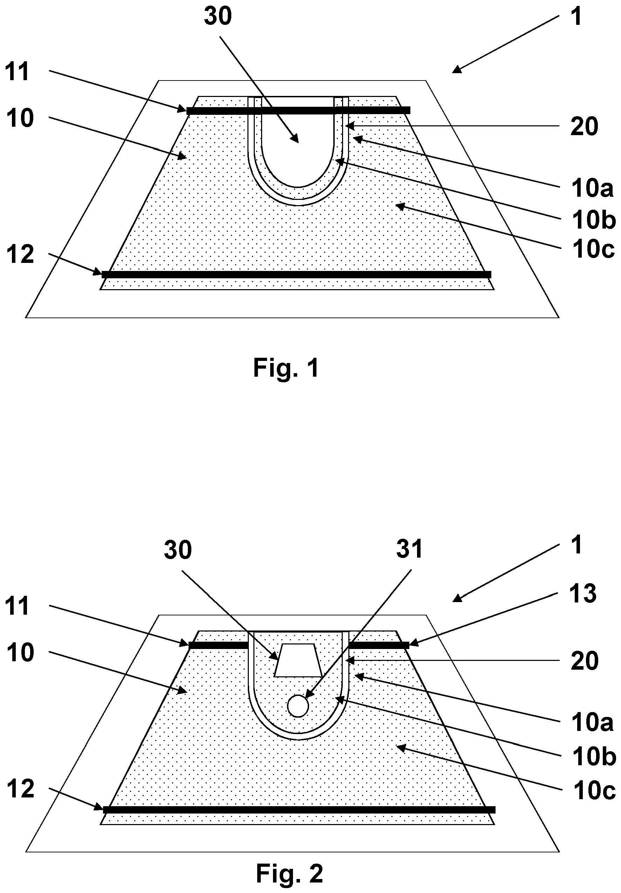

Fig. 1 shows a glazing 1, according to the invention, comprising a conductive coating 10 extending over a substantial portion of the glazing.

A deletion line 20 is provided to define first and second regions 10a, 10b of the conductive coating 10. The deletion line 20 is typically narrow, so as to be invisible for a driver when the glazing 1 is installed in a vehicle. For a typical windscreen installation, a deletion line width should be 100 µm or narrower.

First and second busbars 11, 12 are provided in the first region 10a for supplying electrical power to an electrically heated region 10c of the conductive coating 10. Typically the first busbar 11 is adjacent to an upper edge of the glazing 10 and the second busbar 12 is adjacent to a lower edge of the glazing 1.

A data transmission window 30 is provided in the second region 10b of the conductive coating 10 at a position suitable for one or more transmitters or receivers. Typically a data transmission window 30 is adjacent an upper edge of the glazing 1.

The data transmission window 30 is in a portion of the glazing 1 in which the conductive coating 10 is at least partly absent. The conductive coating may be removed by any deletion method, such as laser ablation or scratching.

The conductive coating 10 may be on a carrier film, such as a thin sheet of polyethylene terephthalate (PET). The carrier film is typically laid over a first sheet of interlayer material, such as polyvinylbutyral (PVB). First and second busbars 11, 12 are arranged in contact with the electrically heated region 10c of the conductive coating 10. The carrier film and the first sheet of interlayer material are arranged on a first sheet of glass. A second sheet of interlayer material is laid over the carrier film, so that the carrier film is arranged between the first and second sheets of interlayer material. A second sheet of glass is laid over the first and second busbars 11, 12.

Fig. 2 shows an embodiment of the invention, in which a glazing 1 comprises a conductive coating 10 and first and second busbars 11, 12. Two data transmission windows 30, 31 are provided in a second region 10b of the conductive coating 10. The second region 10b is separated from the first region 10a by a deletion line 20. Second region 10b is unheated, because it is electrically isolated from the second busbar 12. Second region 10b may be in contact with first busbar 11.

In the embodiment of Fig.2, a length of the first busbar 11 is limited, so as to provide electrical power to only a portion of the electrically heated region 10c, bounded by the deletion line 20. An auxiliary busbar 13 is provided, separated from the first busbar 11 by the deletion line 20, for supplying electrical power to another portion of the electrically heated region 10c. Typically the auxiliary busbar 13 and the first busbar 11 are electrically connected by a wire external to the glazing.

First and second data transmission windows 30, 31 may be of any shape and size, for example circular, trapezoidal, rectangular with rounded corners or U-shaped.

The deletion line 20 may define the second region 10b to have any shape.

The deletion line 20 may circumscribe the second region 10b.

The second region 10b may extend between the deletion line 20 and an edge of the conductive coating 10.

### Examples of the invention

A glazing was prepared according to the invention, in which a deletion line defined a second region of a conductive coating, and comprising a data transmission window in the second region. A comparative example was prepared having similar features but without a deletion line between the data transmission window and an electrically heated region.

In both the example and the comparative example, a conductive coating 10 was provided on a carrier film comprising a sheet of PET. Surface resistivity of the conductive coating 10 on the carrier film was between 2 and 20 ohms per square. The sheet of PET was laid over a first sheet of interlayer material (PVB) in a manner known in the art.

A first busbar 11 and an auxiliary busbar 13 were arranged on an electrically heated region 10c of the conductive coating 10 on the sheet of PET. The first sheet of PVB and the sheet of PET were laid over the first sheet of glass.

The sheet of PET was cut back from an edge of the first sheet of glass, in a manner known in the art to avoid corrosion at the edge of a laminated glazing. The cut-back edge of the sheet of PET and a ceramic print, known as an obscuration band, printed on surface 2 (inner surface) of the first sheet of glass, were arranged so that the cut-back edge was hidden by the obscuration band.

A second sheet of interlayer material (PVB) was laid over the carrier film so that the carrier film was between the two sheets of PVB. A second sheet of glass was laid on top of the second sheet of PVB to form an assembly. The assembly was pressed at its edges and degassed, then subjected to elevated temperature and elevated pressure in an autoclave according to a process known in the art to form a laminated glazing 1.

An electrical power supply was connected to the laminated glazing 1 by means of external wires, serving as electrodes. A positive electrode was connected to the first busbar 11, in parallel with the auxiliary busbar 13, and a negative electrode was connected to the second busbar 12. The laminated glazing 1 was thus electrically heated for a predetermined period. At the end of the predetermined period a temperature distribution was measured. The predetermined period was 12 minutes and a measurement apparatus was a thermal imaging camera.

In the comparative example, hotspots were observed exceeding 95 degrees C, which is defined as a threshold of unacceptable temperature. By contrast, in the example according to the invention no unacceptable hotspots were observed.

## Claims

1. A glazing (1), comprising:
- a conductive coating (10) suitable for electrical heating
- a deletion line (20) defining first and second regions (10a, 10b) of the conductive coating (10)
wherein the first region (10a) comprises:
- an electrically heated region (10c)
- first and second busbars (11, 12) for supplying electrical power to the electrically heated region (10c)
wherein the second region (10b) comprises at least one data transmission window (30)
**characterised in that**:
- the second region (10b) is electrically isolated from the second busbar (12).

2. A glazing according to any preceding claim, comprising a second data transmission window (31).

3. A glazing according to any preceding claim, wherein the deletion line (20) width is 100 µm or less.

4. A glazing according to any preceding claim, wherein the deletion line (20) width is 10 µm or less.

5. A glazing according to any preceding claim, wherein the deletion line (20) is a laser ablation line.

6. A glazing according to any preceding claim, wherein each data transmission window is at least 40 mm wide and at least 20 mm in height.

7. A glazing according to any preceding claim, wherein the first busbar (11) extends substantially parallel with and adjacent to a portion of an upper edge of the glazing (1).

8. A glazing according to any preceding claim, further comprising an auxiliary busbar (13) separated from the first busbar (11) by the deletion line (20).

9. A glazing according to any preceding claim, wherein the first busbar (11) and the deletion line (20) are arranged to contact each other, so that a corner of the electrically heated region (10c) is formed.

10. A glazing according to any preceding claim, wherein the conductive coating (10) has sheet resistance in the range 2 ohms per square to 20 ohms per square.

11. A glazing according to any preceding claim, further comprising a carrier film for carrying the conductive coating (10).

12. A glazing according to any preceding claim, further comprising first and second sheets of interlayer material, wherein the carrier film is laid over the first sheet of interlayer material and wherein the second sheet of interlayer material is laid over the carrier film.

13. An automotive vehicle having a glazing (1) according to any preceding claim, wherein the interior of the vehicle is provided with at least one transmitter or receiver arranged to transmit or receive an electromagnetic data signal through at least one of the data transmission windows (30, 31).

14. A process for manufacture of a glazing (1) comprising the steps:
- providing a conductive coating (10) suitable for electrical heating
- ablating a deletion line (20) by means of a laser, so as to define first and second regions (10a, 10b) of the conductive coating (10)
- providing in the first region (10a) an electrically heated region (10c) by laying down first and second busbars (11, 12) for supplying electrical power to the electrically heated region (10c)
- providing in the second region (10b) at least one data transmission window (30)
**characterised by**:
- the second region (10b) is electrically isolated from the second busbar (12).

## Patentansprüche

1. Verglasung (1), die umfasst:
- eine leitfähige Beschichtung (10), die für elektrisches Beheizen geeignet ist,
- eine Deletionslinie (20), die einen ersten Bereich (10a) und einen zweiten Bereich (10b) der leitfähigen Beschichtung (10) definiert,
wobei der erste Bereich (10a) umfasst:
- einen elektrisch beheizten Bereich (10c),
- eine erste Stromschiene (11) und eine zweite Stromschiene (12) zum Versorgen des elektrisch beheizten Bereichs (10c) mit elektrischem Strom,
wobei der zweite Bereich (10b) mindestens ein Datenübertragungsfenster (30) umfasst;
**dadurch gekennzeichnet, dass**
- der zweite Bereich (10b) von der zweiten Stromschiene (12) elektrisch isoliert ist.

2. Verglasung nach dem vorhergehenden Anspruch, die ein zweites Datenübertragungsfenster (31) umfasst.

3. Verglasung nach einem beliebigen vorhergehenden Anspruch, wobei die Breite der Deletionslinie (20) 100 µm oder weniger ist.

4. Verglasung nach einem beliebigen vorhergehenden Anspruch, wobei die Breite der Deletionslinie (20) 10 µm oder weniger ist.

5. Verglasung nach einem beliebigen vorhergehenden Anspruch, wobei die Deletionslinie (20) eine Laserablationslinie ist.

6. Verglasung nach einem beliebigen vorhergehenden Anspruch, wobei jedes Datenübertragungsfenster mindestens 40 mm breit und mindestens 20 mm hoch ist.

7. Verglasung nach einem beliebigen vorhergehenden Anspruch, wobei sich die erste Stromschiene (11) im Wesentlichen parallel zu und benachbart zu einem Abschnitt eines oberen Randes der Verglasung (1) erstreckt.

8. Verglasung nach einem beliebigen vorhergehenden Anspruch, die weiterhin eine Hilfsstromschiene (13) umfasst, die von der ersten Stromschiene (11) durch die Deletionslinie (20) getrennt ist.

9. Verglasung nach einem beliebigen vorhergehenden Anspruch, wobei die erste Stromschiene (11) und die Deletionslinie (20) so angeordnet sind, dass sie einander kontaktieren, so dass eine Ecke des elektrisch beheizten Bereichs (10c) gebildet wird.

10. Verglasung nach einem beliebigen vorhergehenden Anspruch, wobei die leitfähige Beschichtung (10) einen Flächenwiderstand im Bereich von 2 Ohm pro Quadrat bis 20 Ohm pro Quadrat aufweist.

11. Verglasung nach einem beliebigen vorhergehenden Anspruch, die weiterhin einen Trägerfilm zum Tragen der leitfähigen Beschichtung (10) umfasst.

12. Verglasung nach einem beliebigen vorhergehenden Anspruch, die weiterhin eine erste Lage und eine zweite Lage aus Zwischenschichtmaterial umfasst, wobei der Trägerfilm auf der ersten Lage aus Zwischenschichtmaterial angeordnet ist und wobei die zweite Lage aus Zwischenschichtmaterial auf dem Trägerfilm angeordnet ist.

13. Kraftfahrzeug, das eine Verglasung (1) nach einem beliebigen vorhergehenden Anspruch aufweist, wobei der Innenraum des Fahrzeugs mit mindestens einem Sender oder Empfänger ausgestattet ist, der dafür ausgestaltet ist, ein elektromagnetisches Datensignal durch mindestens eines der Datenübertragungsfenster (30, 31) zu senden oder zu empfangen.

14. Verfahren zur Herstellung einer Verglasung (1), das die folgenden Schritte umfasst:
- Bereitstellen einer leitfähigen Beschichtung (10), die für elektrisches Beheizen geeignet ist,
- Abtragen einer Deletionslinie (20) mit Hilfe eines Lasers, um so einen ersten Bereich (10a) und einen zweiten Bereich (10b) der leitfähigen Beschichtung (10) zu definieren,
- Bereitstellen eines elektrisch beheizten Bereichs (10c) in dem ersten Bereich (10a) durch Anbringen einer ersten Stromschiene (11) und einer zweiter Stromschiene (12) zum Versorgen des elektrisch beheizten Bereichs (10c) mit elektrischem Strom,
- Bereitstellen mindestens eines Datenübertragungsfensters (30) in dem zweiten Bereich (10b),
**dadurch gekennzeichnet, dass**
- der zweite Bereich (10b) von der zweiten Stromschiene (12) elektrisch isoliert ist.

## Revendications

1. Vitrage (1), comprenant :
- un revêtement conducteur (10) approprié pour un chauffage électrique
- une ligne de suppression (20) définissant des première et seconde régions (10a, 10b) du revêtement conducteur (10)
dans lequel la première région (10a) comprend :
- une région électriquement chauffée (10c)
- des première et seconde barres omnibus (11, 12) pour apporter de l'énergie électrique à la région électriquement chauffée (10c)
dans lequel la seconde région (10b) comprend au moins une fenêtre de transmission de données (30)
**caractérisé en ce que** :
- la seconde région (10b) est électriquement isolée de la seconde barre omnibus (12).

2. Vitrage selon une quelconque revendication précédente, comprenant une seconde fenêtre de transmission de données (31).

3. Vitrage selon une quelconque revendication précédente, dans lequel la largeur de la ligne de suppression (20) est de 100 µm ou moins.

4. Vitrage selon une quelconque revendication précédente, dans lequel la largeur de la ligne de suppression (20) est de 10 µm ou moins.

5. Vitrage selon une quelconque revendication précédente, dans lequel la ligne de suppression (20) est une ligne d'ablation au laser.

6. Vitrage selon une quelconque revendication précédente, dans lequel chaque fenêtre de transmission de données fait au moins 40 mm de large et au moins 20 mm de haut.

7. Vitrage selon une quelconque revendication précédente, dans lequel la première barre omnibus (11) s'étend de manière sensiblement parallèle et adjacente à une portion d'un bord supérieur du vitrage (1).

8. Vitrage selon une quelconque revendication précédente, comprenant en outre une barre omnibus auxiliaire (13) séparée de la première barre omnibus (11) par la ligne de suppression (20).

9. Vitrage selon une quelconque revendication précédente, dans lequel la première barre omnibus (11) et la ligne de suppression (20) sont agencées pour être en contact l'une avec l'autre, de telle sorte qu'un coin de la région électriquement chauffée (10c) est formé.

10. Vitrage selon une quelconque revendication précédente, dans lequel le revêtement conducteur (10) a une résistance de couche dans la plage de 2 ohms par carré à 20 ohms par carré.

11. Vitrage selon une quelconque revendication précédente, comprenant en outre un film porteur pour porter le revêtement conducteur (10).

12. Vitrage selon une quelconque revendication précédente, comprenant en outre des première et seconde feuilles de matériau intercalaire, dans lequel le film porteur est déposé sur la première feuille de matériau intercalaire et dans lequel la seconde feuille de matériau intercalaire est déposée sur le film porteur.

13. Véhicule automobile comportant un vitrage (1) selon une quelconque revendication précédente, dans lequel l'intérieur du véhicule est pourvu d'au moins un émetteur ou récepteur agencé pour transmettre ou recevoir un signal de données électromagnétique à travers au moins l'une des fenêtres de transmission de données (30, 31).

14. Processus de fabrication d'un vitrage (1) comprenant les étapes de :
- fourniture d'un revêtement conducteur (10) approprié pour un chauffage électrique
- ablation d'une ligne de suppression (20) à l'aide d'un laser, de manière à définir des première et seconde régions (10a, 10b) du revêtement conducteur (10)
- fourniture dans la première région (10a) d'une région électriquement chauffée (10c) en posant des première et seconde barres omnibus (11, 12) pour apporter de l'énergie électrique à la région électriquement chauffée (10c)
- fourniture dans la seconde région (10b) d'au moins une fenêtre de transmission de données (30)
**caractérisé par** :
- la seconde région (10b) est électriquement isolée de la seconde barre omnibus (12).
